# FASCICULE DE BREVET EUROPEEN

(11) **EP 0 394 186 B1**
(45) Date de publication et mention de la délivrance du brevet: **10.11.1993**
(21) Numéro de dépôt: 90810055.5
(22) Date de dépôt: 24.01.1990
(51) Int. Cl.: F16C 13/00

(54) **Galet**
Rolle
Roller

(30) Priorité: 25.01.1989 CH 228/89
(43) Date de publication de la demande: 24.10.1990
(73) Titulaire: SKB Fabrique de roulements SA, CH-2504 Bienne (CH)
(72) Inventeur: Crochat, André, CH-2533 Evilard (CH); Beutler, Fred, CH-2525 Le Landeron (CH)
(74) Mandataire: Fischer, Franz Josef

(56) Documents cités:
- DE-A- 2 501 513
- FR-A- 1 589 139
- GB-A- 1 202 190
- US-A- 3 432 214
- PATENT ABSTRACTS OF JAPAN, vol. 10, no. 349 (M-538)[2405], 26 novembre 1986;
- & JP-A-61 149 615 (MASANORI MOCHIZUKI) 08-07-1986

## Description

Divers systèmes existent pour la fixation de galets roulants, en particulier des galets de cames, sur des supports ou leviers de commande.

Un premier système de fixation à l'aide d'une tige filetée dont la tête fait partie de la bague intérieure du galet ou s'appuie sur cette bague intérieure, ladite tige filetée étant alors vissée dans un trou borgne taraudé d'un levier, est principalement utilisé pour des applications dans lesquelles l'espace disponible entre les différents leviers est limité. Un deuxième système consiste à fixer la bague intérieure du galet sur le levier à l'aide d'un agent de collage usuel. Si ces deux systèmes permettent une fixation du galet utilisant un minimum de place entre les différents leviers, ils ne sont pas absolument sûrs et fiables à long terme vu les importantes sollicitations mécaniques auxquelles le galet est soumis; ces sollicitations amèneront à terme à un desserrage du galet vissé sur le levier, respectivement à un décollement dudit galet, qui devient alors un obstacle pour l'ensemble mécanique qu'il est supposé guider.

Un autre système consiste à réaliser un alésage traversant de part en part le levier et à sécuriser le galet de came à l'aide d'un arbre partiellement fileté qui recevra un ou deux écrous de blocage. L'inconvénient de cette méthode est l'espace nécessaire entre les différents leviers afin d'y loger les écrous; ceci est particulièrement problématique dans la cas, par exemple, d'applications dans le domaine des machines textiles qui requièrent un nombre considérable de cames, galets de cames et leviers de commande dans un espace particulièrement restreint.

Dérivé du dernier système mentionné, le système dans lequel le galet de came possède un arbre creux qui est fixé par sertissage de son extrémité contre le levier, n'est pas très souhaitable car le remplacement d'un galet entraîne une détérioration de l'arbre, du levier, et un démontage coûteux des ensembles mécaniques peu accessibles.

D'autres systèmes de fixation ont été proposés, en particulier celui mentionné dans le brevet GB-A-1 202 190 reflétant l'état de la technique le plus proche. Dans ces systèmes, le galet comporte un premier tronçon d'axe de fixation en forme de tronc de cône coopérant avec un second tronçon d'axe creux dont la forme intérieure est aussi en tronc de cône, les deux tronçons d'axes étant pressés l'un contre l'autre à l'aide d'une vis centrale faisant se dilater le second tronçon d'axe comportant une fente longitudinale afin qu'il se bloque à l'intérieur d'un alésage du levier. Si ce système peut être considéré comme relativement satisfaisant, il a l'inconvénient de ne pas pouvoir être utilisé dans un trou borgne; d'autre part le galet comportant le premier tronçon d'axe doit être monté indépendamment du second tronçon d'axe, ce qui en rend le montage plus compliqué et particulièrement ardu dans les endroits peu accessibles.

Un autre système de fixation a été décrit dans le brevet US 3-A-432 214 par lequel la fixation d'un galet est assurée par dilatation d'un tronçon d'axe; ce système est encore plus compliqué que le précédent dans la mesure où le galet doit être monté entre deux supports, l'axe traversant complètement lesdits supports.

Le système de fixation d'un galet selon l'invention se propose de pallier aux inconvénients mentionnés des systèmes existant selon l'état de la technique et applicable aussi bien à la fixation de galets de cames qu'à la fixation de galets de guidage de palettes dans des centres d'usinage; pour ceci, la fixation du galet sur l'élément support doit être la plus simple possible, soit nécessiter un minimum de pièces, le montage doit pouvoir être effectué avec les différentes pièces pré-assemblées, sans nécessiter l'introduction de pièce complémentaire de l'autre côté du support ou du levier, ce qui facilite grandement le montage dans des endroits peu accessibles, d'autre part le système de fixation doit pouvoir s'accomoder de trous borgnes ou traversants et enfin, bien que la fixation du galet sur son support ou son levier doive être absolument fiable dans le temps, son démontage doit pouvoir s'effectuer facilement et sans endommagement d'aucune pièce.

Pour répondre à ceci, le galet selon l'invention possède les caractéristiques mentionnées dans les revendications.

On va décrire ci-après, à titre d'exemple, trois formes de réalisation de l'objet de l'invention en se référant au dessin annexé dont
la fig. 1 est une vue en coupe d'une forme d'exécution de l'objet de l'invention,
la fig. 2 est une vue frontale de la même forme d'exécution de l'objet de l'invention,
la fig. 3 est une vue en coupe d'une deuxième forme d'exécution de l'objet de l'invention,
la fig. 4 est une vue en coupe d'une troisième forme d'exécution de l'objet de l'invention.

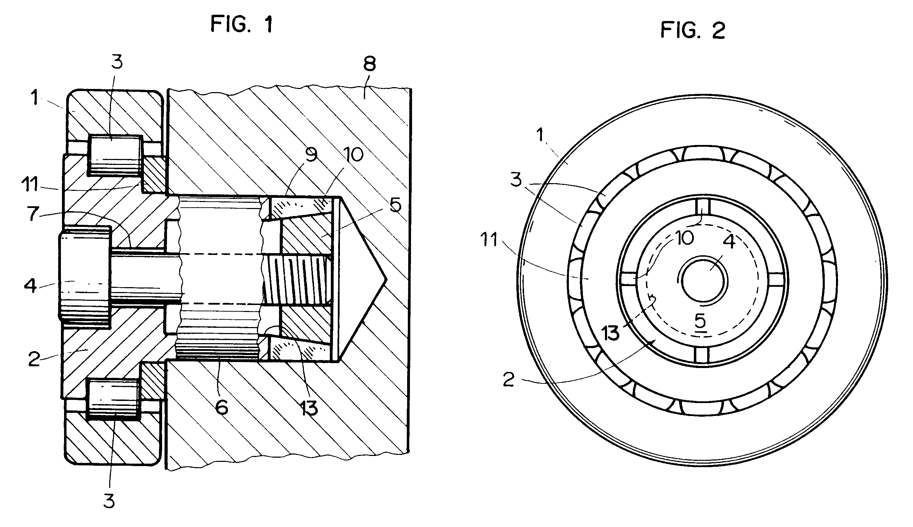

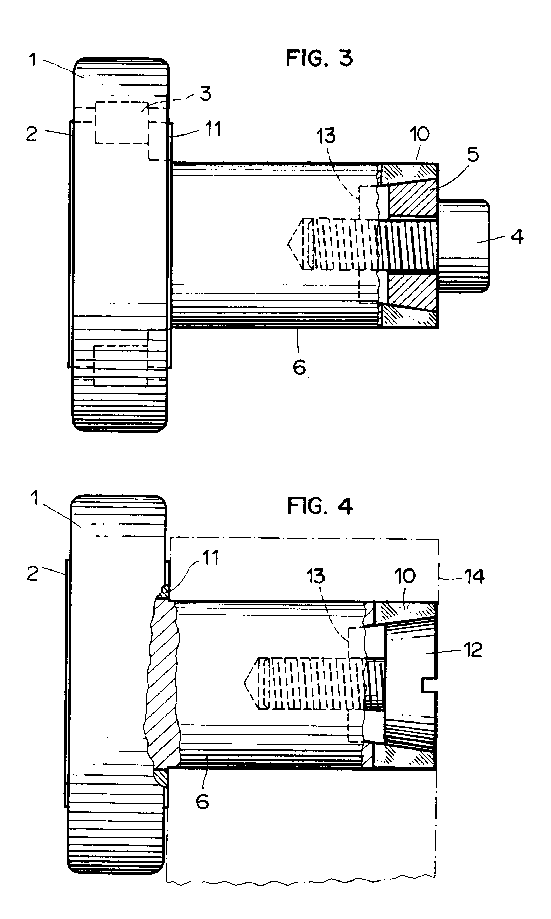

La figure 1 montre les éléments principaux constituant une forme d'exécution de l'invention, à savoir la bague externe 1, la bague interne 2 munie de son axe de fixation cylindrique 6 dont l'extrémité 13 est tubulaire, les éléments roulants 3 (aiguilles, rouleaux, billes, etc.), la tige filetée munie d'une tête et formant une vis 4 et l'élément intermédiaire de blocage 5. Le profil intérieur de l'extrémité tubulaire 13 de l'axe de fixation 6 est conique, alors que l'élément intermédiaire 5 est une bague tronconique dont la conicité correspond à celle de l'extrémité tubulaire. La bague interne 2 possède un alésage central 7 de diamètre supérieur au diamètre de la partie filetée de la vis 4. L'élément intermédiaire 5 possède un taraudage central correspondant au filetage de la vis 4. De plus, l'extrémité tubulaire de l'axe de fixation possède sur sa périphérie une ou plusieurs fentes longitudinales 10, de manière à améliorer son blocage dans l'enveloppe du support ou du levier par augmentation de son élasticité. L'extrémité tubulaire sera, de préférence, équipée de quatre fentes réparties à 90°. On a constaté qu'avec quatre fentes réparties à 90°, le prolongement se déforme d'une manière symétrique et que le galet reste parfaitement centré, il n'apparaît aucune influence défavorable sur le positionnement du galet. Lorsque la vis est desserrée et n'actionne pas l'élément de blocage 5, l'axe de fixation présente un diamètre extérieur permettant l'insertion du galet dans un trou borgne 9, ménagé par exemple dans un support 8 (fig. 1) ou dans un trou traversant d'un levier 14 (fig. 4), le diamètre et la profondeur du trou 9 étant évidemment adapté pour recevoir l'axe de fixation. En vissant la vis 4, l'élément 5 va se mouvoir vers la gauche et va, par déformation élastique de l'extrémité tubulaire, provoquer une augmentation du diamètre extérieur de ladite extrémité, ce qui aura pour conséquence un blocage mécanique du galet dans le trou 9 du support 8 ou du levier 14. Par ailleurs, la rondelle 11 sert de butée au galet et permet par-là sa rotation lorsque le galet est plaqué contre le support 8.

La fig. 2 montre d'une manière plus claire les fentes longitudinales 10 améliorant l'élasticité radiale à l'extrémité tubulaire de l'axe du galet.

Cette forme d'exécution est particulièrement adaptée pour le montage et la fixation d'un galet dans un trou borgne, elle assure une sécurisation maximale du galet sans présence d'agents de collage dont les inconvénients ont été cités ci-avant.

Bien entendu, la forme intérieure conique de l'extrémité tubulaire de l'axe du galet, de même que le profil tronconique de la bague ne sont donnés qu'à titre d'exemple, et toute autre forme de ces éléments ayant pour fonction de réaliser une augmentation du diamètre extérieur de l'extrémité tubulaire peut être envisagée, telle que, par exemple, une extrémité tubulaire de diamètre intérieur constant dont l'augmentation du diamètre serait causée par l'introduction d'un élément en forme de calotte sphérique, d'ogive, etc.

La fig. 3 montre une seconde forme d'exécution de l'objet de l'invention. Il s'agit d'un galet destiné à être fixé dans un alésage traversant de part en part un support ou un levier.

Le principe de fonctionnement est identique à celui décrit pour la forme d'exécution mentionnée aux fig. 1 et 2 et l'on retrouve les mêmes éléments de base, à savoir la bague externe 1, la bague interne 2 munie de son axe de fixation cylindrique 6 dont l'extrémité 13 est tubulaire, la vis 4 et l'élément intermédiaire de blocage 5. Dans cette forme d'exécution, la bague interne 2 possède un taraudage central correspondant au filetage de la vis 4 et l'élément de blocage 5 possède un alésage central de diamètre supérieur au diamètre de la partie filetée de la vis 4. Ici, également, le profil intérieur de l'extrémité tubulaire 13 est conique et l'élément de blocage 5 est une bague dont la conicité correspond à celle de l'extrémité tubulaire. En vissant la vis 4, l'élément 5 va se mouvoir vers la gauche et va, par déformation élastique de l'extrémité tubulaire, provoquer une augmentation du diamètre extérieur de ladite extrémité, ce qui aura, ici aussi, pour conséquence un blocage mécanique du galet dans le trou traversant destiné à le recevoir.

La fig. 4 montre une troisième forme d'exécution de l'objet de l'invention qui ne diffère de celle décrite à la fig. 3 que par le fait que l'élément de blocage est constitué par la tête de la vis 12; ladite tête est de profil tronconique dont la conicité correspond au profil intérieur de l'extrémité tubulaire 13 de la bague interne 2 du galet.

En vissant la vis 12, sa tête à profil tronconique va également, par déformation élastique de l'extrémité tubulaire, provoquer une augmentation du diamètre extérieur de ladite extrémité, ce qui aura pour conséquence un blocage mécanique du galet dans le trou traversant destiné à le recevoir.

L'avantage du galet selon l'invention, selon les différentes formes d'exécution décrites, est de pouvoir être installé dans des supports à trous borgnes ou traversants, tout en obtenant un gain de place, une facilité de montage et une sécurité de blocage considérables en comparaison des systèmes de fixation de l'art antérieur.

## Revendications

1. Galet destiné à être fixé dans l'alésage (9) traversant ou borgne d'un support, comportant une bague externe (1) et une bague interne (2), des éléments roulants (3) disposés entre les deux bagues (1,2), la bague interne (2) présentant un prolongement tubulaire (6) formant axe de fixation dudit galet, une tige filetée (4,12) disposée dans le prolongement tubulaire (6) de la bague interne (2), et un élément intermédiaire (5, 12) manoeuvré par ladite tige (4,12) et exerçant un effort radial de serrage sur l'extrémité (13) du prolongement tubulaire (6), provoquant ainsi le blocage dudit prolongement (6) dans l'alésage (9) du support et donc la fixation du galet, caractérisé en ce que le profil intérieur de l'extrémité (13) du prolongement tubulaire (6) est conique, le sommet du cône se situant du côté de la base du prolongement tubulaire (6), en ce que l'élément intermédiaire (5, 12) est une bague tronconique prévue dans un espace ménagé entre ledit prolongement tubulaire et ladite tige filetée (4, 12), et en ce qu'une rondelle d'appui (11) est prévue autour de la base du prolongement tubulaire (6), ladite rondelle (11) venant en appui contre la bague intérieure (2), d'une part, et contre la surface en regard du support d'autre part, et servant de butée au galet.

2. Galet selon la revendication 1, caractérisé en ce que l'extrémité tubulaire comporte au moins une fente.

3. Galet selon la revendication 1 ou 2, caractérisé en ce que la bague tronconique (5) comporte un alésage central taraudé correspondant au filetage de la tige filetée (4).

4. Galet selon la revendication 1 ou 2, caractérisé en ce que la bague tronconique (5) comporte un alésage central de diamètre supérieur au filetage de la tige filetée (4), la bague interne (2) comportant un taraudage central correspondant au filetage de la tige filetée (4).

5. Galet selon la revendication 1 ou 2, caractérisé en ce que la bague tronconique (12) est solidaire de la tige filetée (12) et en constitue sa tête.

## Patentansprüche

1. Rolle, die zum Befestigen in einer Durchgangsbohrung oder in einer Sacklochbohrung (9) eines Trägers bestimmt ist, mit einem äusseren Ring (1) und einem inneren Ring (2), mit Rollelementen (3), die zwischen den zwei Ringen (1, 2) angeordnet sind, wobei der innere Ring (2) eine rohrförmige Verlängerung, welche eine Befestigungsachse für die Rolle bildet, aufweist, mit einem ein Gewinde aufweisenden Stift (4, 12), der in der rohrförmigen Verlängerung (6) des inneren Ringes (2) angeordnet ist sowie mit einem Zwischenstück (5, 12), welches durch den genannten Stift (4, 12) geführt ist und einen radialen Festhaltedruck auf den Endbereich (13) der rohrförmigen Verlängerung (6) ausübt und dadurch die Blockierung der genannten Verlängerung (6) in der Bohrung des Trägers und damit die Befestigung der Rolle bewirkt, dadurch gekennzeichnet, dass die innere Form des Endbereiches (13) der rohrförmigen Verlängerung konisch ist, wobei die Spitze des Konus auf der Seite der Basis der rohrförmigen Verlängerung (6) gelegen ist, dass das Zwischenelement (5, 12) ein kegelstumpfförmiger Ring ist, der in einem Raum zwischen der rohrförmigen Verlängerung und dem Stift (4, 12) angebracht ist, und dass eine Auflagescheibe (11) um die Basis der rohrförmigen Verlängerung (6) angeordnet ist, wobei die Scheibe einerseits am inneren Ring (2) und andererseits gegen die Oberfläche des Trägers anliegt und einen Anschlag für die Rolle bildet.

2. Rolle nach Anspruch 1, dadurch gekennzeichnet dass der rohrförmige Endbereich mindestens einen Schlitz aufweist.

3. Rolle nach Anspruch 1 oder 2, dadurch gekennzeichnet, dass der kegelstumpfförmige Ring (5) eine zentrale Bohrung mit einem Innengewinde aufweist, welches dem Gewinde des Stiftes (4) entspricht.

4. Rolle nach Anspruch 1 oder 2, dadurch gekennzeichnet, dass der kegelstumpfförmige Ring eine zentrale Bohrung mit einem grösseren Durchmesser als das Gewinde des Stiftes (4) aufweist und der innere Ring (2) ein zentrales Innengewinde entsprechend dem Gewinde des Gewindestiftes (4) umfasst.

5. Rolle nach Anspruch 1 oder 2, dadurch gekennzeichnet, dass der kegelstumpfförmige Ring (12) einstückig mit dem Stift (12) ausgebildet ist und dessen Kopf bildet.

## Claims

1. Roller intended to be fixed in a continuous or blind bore (9) of a support, comprising an external ring (1) and an internal ring (2), rolling elements (3) disposed between the two rings (1, 2), the internal ring having a tubular prolongation (6) forming the axis of fixation of the said roller, a screw rod (4, 12) disposed in the tubular prolongation (6) of the internal ring (2), and an intermediate element (5, 12) controlled by the said rod (4, 12) and exerting a radial gripping force on the end (13) of the tubular prolongation (6), causing in this way the blocking of the said prolongation (6) in the bore (9) of the support and thus the fixing of the roller, wherein the inner contour of the end (13) of the tubular prolongation (6) is conical, the point of the cone being situated on the side of the base of the tubular prolongation (6), wherein the intermediate element (5, 12) is a frustoconical ring foreseen in a recess between the said tubular prolongation and the said screw rod (4, 12), and wherein an support washer (11) is foreseen around the base of the tubular prolongation (6), the said washer (11), on the one side, coming as a support against the interior ring (2), and, on the other side, against the surface facing the support, and serving as a stop for the roller.

2. Roller according to claim 1, wherein the tubular end includes at least one slit.

3. Roller according to claim 1 or 2, wherein the frustoconical ring (5) includes a central threaded bore corresponding to the threading of the screw rod (4).

4. Roller according to claim 1 or 2, wherein the frustoconical ring (5) includes a central bore of greater diameter than the threading of the screw rod (4), the internal ring (2) including a central threading corresponding to the threading of the screw rod (4).

5. Roller according to claim 1 or 2, wherein the frustoconical ring (12) is integral with the screw rod (12) [sic.(4)] and constitutes its head.
